Europäisches Patentamt

European Patent Office

Office européen des brevets

(19)

(11) Numéro de publication : **0 396 455 B1**

(12) **FASCICULE DE BREVET EUROPEEN**

(45) Date de publication du fascicule du brevet :
29.07.92 Bulletin 92/31

(51) Int. Cl.⁵ : **F16L 37/08, F28F 9/02,
F28F 9/06**

(21) Numéro de dépôt : **90401139.2**

(22) Date de dépôt : **26.04.90**

(54) **Dispositif d'assemblage par encliquetage pour échangeurs de chaleur de véhicules automobiles.**

(30) Priorité : **05.05.89 FR 8905976**

(43) Date de publication de la demande :
**07.11.90 Bulletin 90/45**

(45) Mention de la délivrance du brevet :
**29.07.92 Bulletin 92/31**

(84) Etats contractants désignés :
**BE DE ES GB IT LU NL SE**

(56) Documents cités :
**US-A- 2 885 754**
**US-A- 4 773 474**

(73) Titulaire : **HUTCHINSON**
**2 rue Balzac**
**F-75008 Paris (FR)**
Titulaire : **VALEO THERMIQUE MOTEUR**
**8 rue Louis Lormand-La Verrière**
**F-78320 Le Mesnil Saint Denis (FR)**

(72) Inventeur : **Potier, Michel**
**9 Square des Carrières**
**F-78120 Rambouillet (FR)**
Inventeur : **Briet, Gilles**
**Le Petit Vallot**
**Neuvy Grandchamp, F-71130 Gueugnon (FR)**

(74) Mandataire : **Orès, Bernard et al**
**Cabinet ORES 6, Avenue de Messine**
**F-75008 Paris (FR)**

Jouve, 18, rue Saint-Denis, 75001 PARIS

EP 0 396 455 B1

**Description**

La présente invention est relative à un dispositif d'assemblage rapide par encliquetage destiné aux échangeurs de véhicules automobiles.

Dans la Demande de Brevet EP-A-327 442, publiée le 09.08.89, état de la technique selon l'article 54(3)CBE, il est décrit un dispositif d'assemblage d'un ensemble échangeur de chaleur/raccord tubulaire dans lequel le raccord tubulaire débouche dans une boîte à eau de l'échangeur et est fixé à la boîte à eau par une liaison élastique facilement démontable. Dans ce cas, la boîte à eau et le raccord tubulaire sont maintenus assemblés à l'aide d'au moins une patte portée par le raccord tubulaire et orientée axialement, laquelle patte est élastique radialement et pourvue d'une dent d'encliquetage à son extrémité axialement interne. Cette dent d'encliquetage vient en butée contre l'extrémité axialement externe d'une oreille tubulaire de guidage portée par la boîte à eau et dans laquelle s'enfile la patte, en présentant la forme d'un hameçon pour éviter le désassemblage sous l'effet des à-coups de pression inhérents au fonctionnement du circuit de refroidissement.

Toutefois, cette conception implique un jeu axial important pour que la dent puisse s'encliqueter sur l'extrémité axialement externe de l'oreille tubulaire de guidage et de butée.

La présente invention a donc pour but de supprimer cet inconvénient, à savoir de réduire au minimum le jeu axial nécessaire à l'assemblage, tout en supprimant tout risque de désencliquetage et facilitant le désassemblage.

La présente invention a pour objet un dispositif d'assemblage d'un ensemble échangeur de chaleur/raccord tubulaire, dans lequel le raccord tubulaire, débouchant dans une ouverture d'une boîte à eau de l'échangeur, est solidarisé d'une part à un tuyau souple par une liaison fixe et, d'autre part, à la boîte à eau par une liaison élastique facilement démontable, l'étanchéité entre le raccord tubulaire et la boîte à eau étant assurée par une bague en élastomère comprimée radialement entre eux, le raccord tubulaire et la boîte à eau étant alignés suivant un axe d'assemblage et constituant les deux éléments à assembler par encliquetage d'au moins une patte, portée par l'un des deux éléments et orientée axialement, cette patte étant élastique radialement et pourvue d'une dent d'encliquetage avec un moyen de butée axiale de cette dent porté par l'autre des deux éléments, ladite patte ayant une configuration de ressort à expansion, dont la réaction élastique agit radialement dans le sens tendant à maintenir cette patte plaquée contre le moyen de butée lorsque lesdits deux éléments sont en position assemblée, caractérisé en ce que ladite patte faisant ressort à la forme d'un ressort à lame comportant au moins une première et une deuxième branches sensiblement parallèles entre elles et à l'axe d'assemblage, dont la première branche fait saillie de l'un des deux éléments dans le sens de l'assemblage, alors que la deuxième branche fait saillie de l'extrémité axialement interne de la première branche dans un sens opposé au sens d'assemblage, en sorte que la patte faisant ressort a la forme d'un U, la dent d'encliquetage faisant saillie radialement vers l'extérieur à partir de la deuxième branche de la patte.

Avantageusement le moyen de butée axiale est réalisé sous forme d'une oreille tubulaire dans laquelle s'enfile la patte faisant ressort et contre une extrémité axialement externe de laquelle vient en butée cette dent d'encliquetage.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés, dans lesquels :

– la figure 1 est une vue en élévation latérale et partiellement en coupe axiale d'un ensemble échangeur de chaleur/raccord tubulaire désassemblés,

– la figure 2 est une vue de dessus qui a trait à la solution antérieurement connue ;

– la figure 3 est une vue de dessus mixte dans laquelle la demi-vue inférieure correspond à la figure 1, à savoir à la boîte à eau et au raccord tubulaire désassemblés, alors que la demi-vue supérieure correspond à ces deux éléments assemblés ;

– la figure 4 est une vue frontale du seul échangeur.

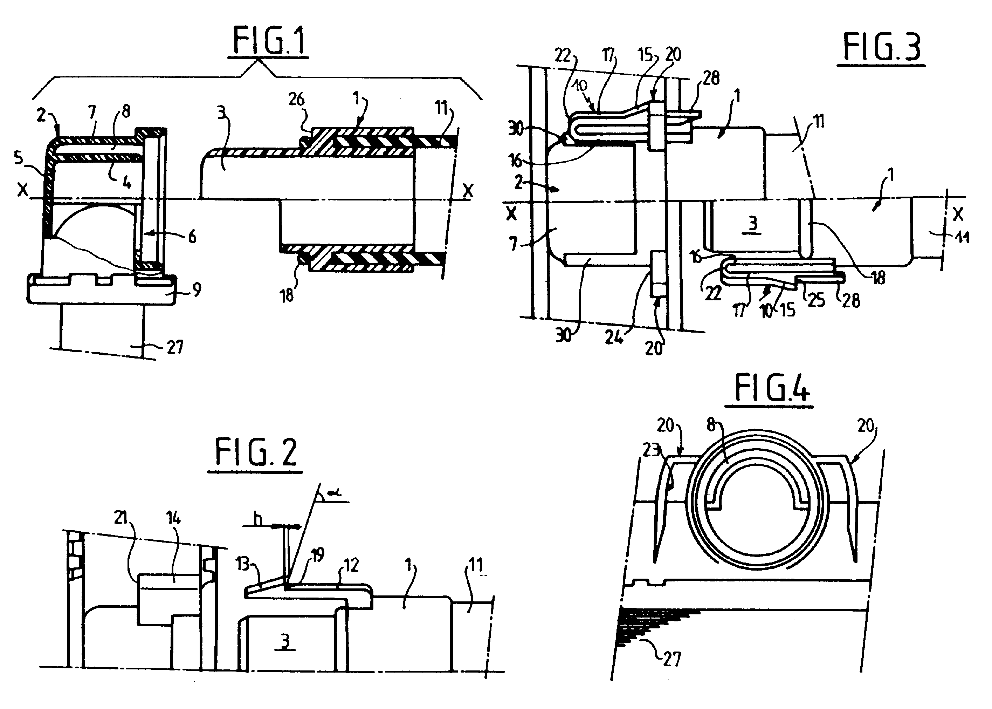

Le dispositif d'assemblage illustré à la figure 1 est du type décrit dans la Demande de Brevet EP-A-327442, déjà évoquée plus haut. Dans cette figure il est facile de reconnaître un raccord tubulaire 1 venant s'emboîter avec une boîte à eau 2 d'un échangeur de chaleur 27 pour véhicule automobile notamment. Le raccord 1 et la boîte 2 sont tous les deux réalisés en matière plastique.

On peut remarquer également la présence d'un ongle (ou doigt) de guidage 3, faisant saillie du raccord 1, ainsi que d'une cloison de guidage 4 faisant saillie de la paroi 5 de la boîte à eau 2, cette paroi 5 étant opposée à l'ouverture 6 ménagée dans cette boîte.

L'étanchéité entre le raccord et la boîte à eau est obtenue à l'aide d'une bague en élastomère 18 disposée sur l'ongle de guidage et d'assemblage 3 contre un épaulement rentrant 26 du raccord.

La cloison 4 délimite avec la paroi (ou voûte) 7, sensiblement parallèle à celle-ci, un logement 8 pour l'ongle de guidage 3 (voir également la figure 3) : cet ongle de guidage 3 est destiné à être enfilé pratiquement complètement dans le logement 8 précité. Comme déjà évoqué dans la Demande de Brevet EP-A-327442, il est facile de comprendre que la pénétration de l'ongle 3 dans son logement à l'intérieur de la boîte à eau 2 permet d'éliminer la tubulure de raccordement qui, dans les solutions de l'Art antérieur, fait saillie de la boîte à eau pour assurer l'assemblage avec le raccord tubulaire, l'absence d'une telle tubulure saillante facilitant le sertissage du collecteur 9 sur la boîte à eau 2.

La figure 1 montre une configuration préférée de l'ongle de guidage 3 et de la cloison de guidage correspondante 4, qui sont définis par des demi-circonférences, bien qu'en général une configuration en arc de circonférence quelconque soit possible, pourvu qu'existe un passage pour l'établissement d'un débit d'écoulement suffisant du fluide de refroidissement de la boîte à eau au tuyau souple 11 ou vice versa. Le tuyau 11 fait partie du circuit de refroidissement et est équipé du raccord tubulaire 1 précité à son extrémité d'accès à la boîte à eau.

La demi-vue illustrée à la figure 2 montre la solution qui a été adoptée dans l'Art antérieur (représenté par la Demande de Brevet EP-A-327442 susdite) pour maintenir le raccord tubulaire 1 et la boîte à eau 2 assemblés entre eux, malgré l'effet des à-coups de pression inhérent au fonctionnement du circuit de refroidissement, et qui évite le risque de désassemblage. Cette solution est constituée par au moins une patte, telle la patte indiquée par la référence 12, portée par le raccord tubulaire 1 et orientée axialement. Cette patte est élastique radialement et est pourvue d'une dent 13 destinée à s'encliqueter avec une butée axiale 14 constituée par une oreille tubulaire 21 portée par la boîte à eau 2 (cf aussi la figure 4).

Dans la demi-vue de la figure 2, il est également facile de remarquer que l'épaulement 19 de la dent d'encliquetage 13 est disposé en biais par rapport à l'orientation de la patte 12, cet épaulement étant incliné d'un angle $\alpha$ dans un sens opposé au sens d'assemblage, à savoir d'un angle aigu par rapport à la patte 12 : h représente le décalage de l'extrémité radialement externe de l'épaulement 19 par rapport à la position verticale, à savoir à la disposition de cet épaulement perpendiculairement à la patte 12. Or, comme déjà évoqué lors de la description de l'Art antérieur, s'il est vrai que l'utilisation de la dent 13, en forme d'hameçon, est vraiment efficace pour éviter le désassemblage entre raccord 1 et boîte à eau 2, toutefois cette solution présente l'inconvénient d'un jeu axial important qui est supérieur à h, ce qui est nécessaire dans ce type de conception pour que la dent 13 puisse s'encliqueter sur l'extrémité axialement extérieure 21 de l'oreille tubulaire 14.

La demi-vue inférieure de la figure 3 permet d'illustrer la solution proposée dans le cadre de la présente invention pour supprimer l'inconvénient constitué par ce jeu axial important dans l'assemblage précité.

A cet effet, on réalise une patte 10 ayant une configuration de ressort à expansion, dont la réaction élastique agit radialement vers l'extérieur, à savoir dans le sens de maintenir cette patte 10 plaquée contre le moyen de butée, 20, porté par la boîte à eau, lorsque celle-ci et le raccord 1 sont en position assemblée.

Cette patte 10, faisant ressort, a de préférence la forme d'un ressort à lame comportant une première branche 16 et une deuxième branche 17, qui sont sensiblement parallèles entre elles et à l'axe d'assemblage x-x. De façon plus précise, la première branche 16 fait saillie du raccord tubulaire 1 dans le sens d'assemblage, alors que la deuxième branche 17 fait saillie de l'extrémité 22, axialement interne, de la première branche 16 dans un sens opposé au sens d'assemblage. De cette manière, la patte 10 faisant ressort a une configuration d'ensemble en **U**. La dent d'encliquetage 15 est portée par la branche libre 17, à partir de laquelle elle fait saillie radialement vers l'extérieur.

Il est ainsi facile de comprendre que sous l'effet des à-coups de pression, inhérents au fonctionnement du circuit de refroidissement, la branche libre 17 du ressort 10 tend à être plaquée contre la paroi interne 23 de l'oreille tubulaire 20 faisant butée axiale pour la dent 15, qui reste donc fermement encliquetée contre l'extrémité axialement extérieure 24 de l'oreille 20 de guidage et de butée susdite. Dans ces conditions, il est donc clair que la dent d'encliquetage 15 n'a pas besoin de présenter une configuration d'hameçon : cela revient à dire que l'épaulement 25 de cette dent 15 peut être disposé de façon à être sensiblement perpendiculaire par rapport à la branche libre 17 qui la porte, réduisant ainsi au minimum le jeu axial nécessaire pour l'assemblage entre le raccord 1 et la boîte à eau 2.

L'effort de traction axiale exercé, sous l'effet des à-coups de pression, sur le raccord 1 en condition assemblée crée une réaction de chacune des oreilles de guidage et de butée 20 qui présente, par rapport à l'extrémité 22 commune aux deux branches 16 et 17 des pattes 10, un couple agissant dans le sens de faire pivoter la branche 17 vers l'extérieur autour de l'extrémité 22, à savoir dans le sens d'écarter entre elles les branches 16 et 17, maintenant ainsi le plaquage désiré de chaque patte 10 contre la butée correspondante 20.

Il est aussi facile de comprendre que la solution de la présente invention permet également de faciliter le désassemblage entre le raccord 1 et la boîte à eau 2, parce que les pattes 10 faisant ressort sont accessibles au niveau de la connection et non plus sur le dessus de la boîte à eau de l'échangeur 27. A cet effet, on peut remarquer (voir en particulier la demi-vue supérieure de la figure 3) que la portion 28 axialement extérieure de la branche libre 17 de la patte 10 fait levier d'actionnement de cette patte permettant le désassemblage immédiat.

Pour améliorer le placage de la patte 10, à savoir de la branche libre 17, contre la paroi interne 23 de l'oreille tubulaire 20, la boîte à eau 2 comporte une nervure axiale 30 d'appui de la branche 16 en position assemblée, cette nervure faisant saillie de la paroi externe de la voûte 7 de la boîte à eau (la nervure 30 a été représentée uniquement à la figure 3). De plus, l'épaulement 25 de la dent 15 peut être avantageusement incliné d'un angle légèrement obtus par rapport à la branche 17 qui porte cette dent, ce qui réduit encore plus le jeu axial tout en améliorant le placage de la branche 17 contre la butée 20.

Ainsi que cela ressort de ce qui précède, l'invention ne se limite nullement à ceux de ses modes de mise en oeuvre, de réalisation et d'application qui viennent d'être décrits de façon plus explicite. En particulier, la disposition des pattes 10 et des butées 20 peut être inversée (à savoir que les pattes 10 peuvent être portées par la boîte à eau 2, tandis que les butées 20 peuvent être ménagées sur le raccord tubulaire 1), sans que pour autant le résultat soit affecté.

De plus, il est clair que la ou les pattes faisant ressort 10 peuvent être réalisées en une seule pièce avec le raccord (ou la boîte à eau) ou être constituées par des pattes métalliques rapportées ou surmoulées suivant les enseignements de la Demande EP-A-327442 déjà évoquée plus haut.

## Revendications

1. Dispositif d'assemblage d'un ensemble échangeur de chaleur/raccord tubulaire, dans lequel le raccord tubulaire (1), débouchant dans une ouverture (6) d'une boîte à eau (2) de l'échangeur (27), est solidarisé d'une part à un tuyau souple (11) par une liaison fixe et, d'autre part, à la boîte à eau (2) par une liaison élastique facilement démontable, l'étanchéité entre le raccord tubulaire (1) et la boîte à eau (2) étant assurée par une bague en élastomère (18) comprimée radialement entre eux, le raccord tubulaire (1) et la boîte à eau (2) étant alignés suivant un axe d'assemblage (x-x) et constituant les deux éléments à assembler par encliquetage d'au moins une patte (10), portée par l'un des deux éléments (1) et orientée axialement, cette patte (10) étant élastique radialement et pourvue d'une dent d'encliquetage (15) avec un moyen de butée axiale (20) de cette dent (15) porté par l'autre des deux éléments (2), ladite patte (10) ayant une configuration de ressort à expansion, dont la réaction élastique agit radialement dans le sens tendant à maintenir cette patte (10) plaquée contre le moyen de butée (20) lorsque lesdits deux éléments (1, 2) sont en position assemblée, caractérisé en ce que ladite patte (10) faisant ressort a la forme d'un ressort à lame comportant au moins une première (16) et une deuxième (17) branches sensiblement parallèles entre elles et à l'axe d'assemblage (x-x), dont la première branche (16) fait saillie de l'un des deux éléments (1) dans le sens de l'assemblage, alors que la deuxième branche (17) fait saillie de l'extrémité axialement interne (22) de la première branche (16) dans un sens opposé au sens d'assemblage, en sorte que la patte faisant ressort a la forme d'un U, la dent d'encliquetage (15) faisant saillie radialement vers l'extérieur à partir de la deuxième branche (17) de la patte (10).

2. Dispositif selon la revendication 1, caractérisé en ce que le moyen de butée axiale est réalisé sous forme d'une oreille tubulaire (20) dans laquelle s'enfile la patte faisant ressort (10) et contre une extrémité axialement externe (24) de laquelle vient en butée cette dent d'encliquetage (15).

3. Dispositif selon l'une quelconque des revendications 1 ou 2, caractérisé en ce que l'autre des deux éléments à assembler comporte une nervure axiale (30) d'appui de la première branche (16) de la patte faisant ressort (10), en position d'assemblage.

4. Dispositif selon l'une quelconque des revendications 1, 2 ou 3, caractérisé en ce que la ou les pattes faisant ressort sont réalisées en une seule pièce avec l'un desdits deux éléments.

5. Dispositif selon l'une quelconque des revendications 1, 2 ou 3, caractérisé en ce que la ou les pattes faisant ressort sont des pattes métalliques rapportées ou surmoulées avec l'un desdits deux éléments.

## Patentansprüche

1. Vorrichtung zum Zusammenbau einer Wärmeaustauscher/Rohrverbindungsanordnung, bei der die Rohrverbindung (1), die in eine Öffnung (6) eines Wasserkastens (2) des Austauschers (27) mündet, einerseits an einem nachgiebigen Schlauch (11) über eine feste Verbindung und andererseits mit dem Wasserkasten (2) über eine elastische leicht demontierbare Verbindung befestigt ist, wobei die Dichtheit zwischen der Rohrverbindung (1) und dem Wasserkasten (2) sichergestellt wird durch einen Ring aus Elastomer (18), der radial zwischen ihnen zusammengedrückt wird, wobei Rohrverbindung (1) und Wasserkasten (2) entsprechend einer Montageachse (x-x) ausgerichtet sind und die beiden durch Einrasten wenigstens einer Klaue (10) zusammenzubauende Elemente bildet, wobei eine Klaue von einem der beiden Elemente (1) getragen und axial orientiert ist und die Klaue (10) radial elastisch und mit einem Rastzahn (15) mittels eines Axiallagers (20) für diesen Zahn (15) versehen ist, welcher durch das andere der beiden Elemente (2) getragen ist, wobei die Klaue (10) eine Expansionsfederkonfiguration hat, deren elastische Reaktion radial in der Richtung wirkt, die versucht diese Klaue (10) gegen das Anschlagmittel (20) gepreßt zu halten, wenn diese beiden Elemente (1, 2) in montierter Stellung sich befinden, dadurch gekennzeichnet, daß diese federbildende Klaue (10) die Form einer Blattfeder mit wenigstens einem ersten (16) und einem zweiten (17) Schenkel, die im wesentlichen parallel zueinander und zur Montageachse (x-x) sind, hat, deren erster Schenkel (16) über eines der beiden Elemente (1) in Montagerichtung hinaus steht, während der zweite Schenkel (17) vom axial innen gelegenen Ende (22) des ersten Schenkels (16) in eine Richtung entgegengesetzt zur Montagerichtung derart vorsteht, daß die federbildende Klaue die Form eines U hat, wobei der Rastzahn (15) radial nach außen ausgehend von dem zweiten Schenkel (17) der Klaue (10) vorsteht.

2. Vorrichtung nach Anspruch 1, dadurch gekennzeichnet, daß das axiale Lagerungsmittel in Form eines rohrförmigen Ansatzes (20) hergestellt ist, in welchen die federbildende Klaue (10) sich einschiebt und gegen deren eines axial außenliegendes Ende (24) dieser Rastzahn (15) in Anschlag kommt.

3. Vorrichtung nach einem der Ansprüche 1 oder 2, dadurch gekennzeichnet, daß das andere der beiden zusammenzufügenden Elemente eine Axialrippe (30) zum Abstützen des ersten Schenkels (16) der federbildenden Klaue (10) in Montagestellung hat.

4. Vorrichtung nach einem der Ansprüche 1 ,2 oder 3, dadurch gekennzeichnet, daß die federbildende(n) Klaue(n) aus einem einzigen Stück mit einem dieser Elemente hergestellt (ist) sind.

5. Vorrichtung nach einem der Ansprüche 1 ,2 oder 3, dadurch gekennzeichnet, daß die federbildende(n) Klaue(n) metallische Klauen sind, die auf eines der beiden Elemente aufgesetzt oder angegossen (ist) sind.

## Claims

1. An assembly device for a heat exchanger and tubular connector assembly, in which the tubular connector (1) opens out into an opening (6) in a tank (2) of the heat exchanger (27) and is fixed firstly to a flexible hose (11) by a permanent connection and secondly to the tank (2) via an easily disassembled resilient connection, with sealing between the tubular connector (1) and the tank (2) being provided by an elastomer ring (18) which is radially compressed therebetween, the tubular connector (1) and the tank (2) being in alignment along an assembly axis (x-x) and constituting two parts to be assembled by snap fastening at least one axially-directed tab (10) carried on one of the two parts (1), said tab (10) being radially resilient and provided with a snap-fastening catch (15), said catch (15) engaging axial abutment means (20) carried by the other one of the two parts (2), said tab having an expansion spring configuration whose resilient reaction acts radially in the direction tending to maintain the tab pressed against the abutment means (20) when the said two parts (1, 2) are in the assembled position, the said assembly device being characterized in that the said spring-forming tab (10) is in the form of a leaf spring comprising at least a first branch (16) and a second branch (17) substantially parallel to each other and to the assembly axis (x-x), with the first branch (16) projecting from one of the two parts (1) in the assembly direction while the second branch (17) projects from the axially inner end (22) of the first branch (16) in the opposite direction to the assembly direction, such that the spring-forming tab is generally U-shaped, with the catch (15) projecting radially outwards from the second branch (17) of the tab (10).

2. A device according to claim 1, characterized in that the axial abutment means is made in the form of a tubular lug (20) in which the spring-forming tab (10) engages with the snap-fastening catch (15) coming into abutment against an axially outer end (24) thereof.

3. A device according to claim 1 or 2, characterized in that the other one of the two parts to be assembled includes an axial rib (30) for bearing against the first branch (16) of the spring-forming tab (10) in the assembled position.

4. A device according to any one of claims 1, 2, or 3, characterized in that the, or each, spring-forming tab is made integrally with one of the said two parts.

5. A device according to any one of claims 1, 2, or 3, characterized in that the, or each, spring-forming tab is a metal tab applied to or overmolded with one of the said two parts.

FIG.3

FIG.1

FIG.4

FIG.2